# NEW EUROPEAN PATENT SPECIFICATION

(11) **EP 2 300 710 B2**
(45) Date of publication and mention of the opposition decision: **19.05.2021**
(45) Mention of the grant of the patent: 26.08.2015
(21) Application number: 09753562.9
(22) Date of filing: 28.05.2009
(51) Int. Cl.: F03D 11/00

(54) **A WIND TURBINE ROTOR, A WIND TURBINE AND USE THEREOF**
WINDTURBINENROTOR, WINDTURBINE UND VERWENDUNG DAVON
ROTOR D'ÉOLIENNE, ET ÉOLIENNE ET SON UTILISATION

(30) Priority: 30.05.2008 DK 200800747; 30.05.2008 US 57577
(43) Date of publication of application: 30.03.2011
(73) Proprietor: Vestas Wind Systems A/S, 8200 Aarhus N (DK)
(72) Inventor: OLESEN, Ib, Svend, DK-8900 Randers (DK); ABDALLAH, Imad, DK-8900 Randers (DK)
(74) Representative: Inspicos P/S
(86) International application number: PCT/DK2009/000121
(87) International publication number: WO 2009/143849

(56) References cited:
- EP-A2- 1 742 015
- EP-A2- 1 742 015
- WO-A1-2005/068834
- WO-A1-2009/068437
- DE-A1-102006 002 708
- DE-A1-102006 002 708
- FR-A1- 2 882 404
- GB-A- 1 116 748
- US-A- 4 465 367
- US-B2- 7 059 822
- J.C. SABEL: "Optical 3D Motion Measurement", IEEE Instrumentation and Measurement Technology Conference, 4 June 1996 (1996-06-04), pages 367-370, XP010163904, Brüssei, Belgien
- G.P. CORTEN: "Optical Motion Analysis of Wind Turbines", European Union Wind Energy Conference, 20 May 1996 (1996-05-20), - 24 May 1996 (1996-05-24), pages 1-3, XP055298245, Göteborg, Schweden

## Description

### Background of the invention

The invention relates to a technique for detecting the shape of a wind turbine blade on a wind turbine rotor, a wind turbine comprising such a rotor and use thereof.

### Description of the Related Art

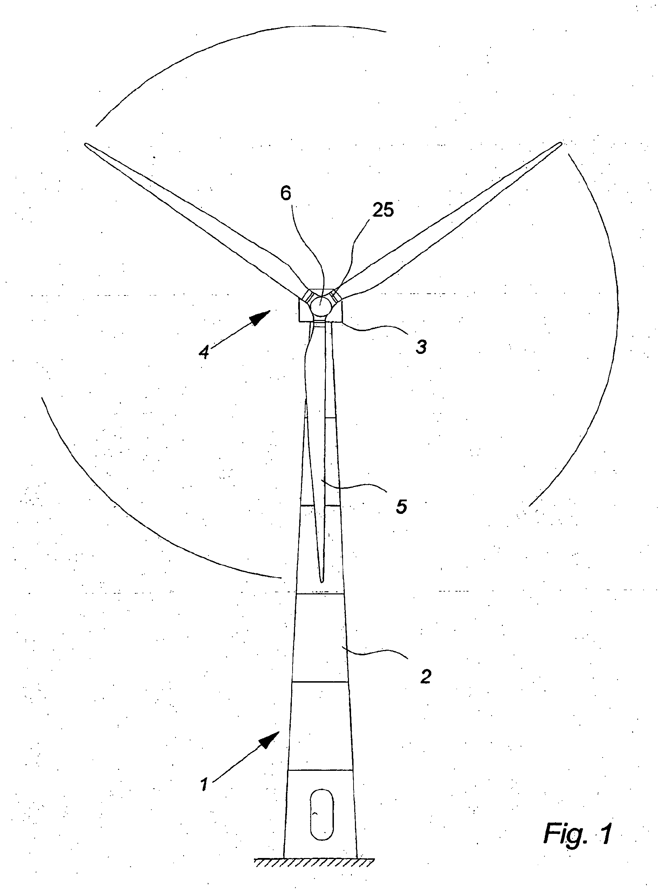

A wind turbine known in the art typically comprises a wind turbine tower and a wind turbine nacelle positioned on top of the tower. A wind turbine rotor, comprising three wind turbine blades, is connected to the nacelle through a low speed shaft, which extends out of the nacelle front as illustrated on figure 1.

In resent years the development of mass-produced wind turbines has moved towards making them larger and larger, both in output and in size. Particularly in the field of mass-produced wind turbine blades, this development has been profound, in that the average mass-produced wind turbine blade over the resent years has more than doubled its length.

It is almost impossible to make such long blades so rigid that they substantially maintain their initial shape under all load conditions and the blades are therefore designed to flex to some degree.

During operation of a wind turbine, the blades will bend and twist due to structural coupling and the aerodynamic loads. Both bending and twisting have an effect on the fatigue life and extreme loads of the blade. Twisting, however, also affects the power output of the turbine. Both bending and twisting depend strongly on the incoming wind and turbulence. To have a better understanding of the operating conditions of a wind turbine rotor and in order to optimize its operation, it is advantageous to know the shape of the blade.

From German patent no. DE 10 2006 002 708 B4 it is known to provide the hub of a wind turbine with a light emitter and a light registering unit, where the light emitter is arranged to emit a beam of light in the direction of a reflector connected to the wind turbine blade at a distance from the hub. The beam is then reflected by the reflector to be registered by the light registering unit. From the position of the reflected beam the deflection of the blade can be deducted but the reflector has to be adjusted very precisely to ensure that the reflected light hits the light registering unit at the hub of the blade. Furthermore the system is very sensitive to even the slightest deformation of the blade, making it unfit for use in large modern wind turbine blade and even further such a system is very sensitive towards vibrations and oscillations.

FR 2 882 404 A discloses an wind turbine rotor according to the preamble of claim 1.

An object of the invention is therefore to provide for an advantageous technique for detecting the shape of a wind turbine blade.

### The invention

The invention provides for a wind turbine rotor. The rotor comprises at least one wind turbine blade, at least one image capturing device, and two or more markers arranged on the blade so that the at least one image capturing device may detect the position of the markers.

If a reference position of a marker was registered when the blade was relaxed e.g. on a calm day when the tip of a blade was facing down and at a later time during operation of the wind turbine a new position of the marker was registered, the deformation of the blade could to some degree be deducted from this change in position by measuring how much the marker had moved and in what direction.

Arranging the markers on the blade therefore ensures that relatively precise information about the shape of the blade can be deducted by means of the image capturing device.

In an aspect of the invention said two or more markers are two or more separate entities connected to a surface of said blade.

Providing the markers as entities which are not formed integrally with the blade is advantageous in that these markers can be retrofitted on exciting wind turbine blades, exciting markers can be moved e.g. to a more advantageous position and they can be exchanged or replaced if they are worn out or damaged.

In an aspect of the invention said two or more markers are connected to a surface of said blade by means of an adhesive.

Connecting the markers to the blade by means of adhesive is advantageous in that adhesive is a reliable and inexpensive for attaching items to a wind turbine blade.

In one aspect of the invention one or more of said two or more markers having an appearance which by said at least one image capturing device is distinguishable from the surrounding blade onto which said two or more of said two or more markers are arranged.

It is advantageous to let the markers have an appearance which by said at least one image capturing device is distinguishable from the surrounding blade onto which said two or more of said two or more markers are arranged because this will make the markers stand out more clearly, hereby making it more easy to identify the position of the marker and thereby increase the accuracy of the system.

In an aspect of the invention said two or more markers comprise a visible area provided with a colour that is different from a colour of said blade.

It is advantageous to make the markers or areas of the markers in a colour that is different from the blade to which they are attached, in that this will make the markers stand out more clearly, hereby making it more easy to identify the position of the marker and thereby increase the accuracy of the system.

In an aspect of the invention said two or more markers comprise a visible light reflective area.

Providing the markers with a light reflective area is advantageous, in that if the markers are located on the inside of the blade, which under normal circumstances will be dark or at least dim or if the markers are located on the outside of the blade during the night-time, the markers will most likely have to be illuminated somehow to enable that the camera can identify the positions of the markers arid a light reflective area will therefore make the markers "light up" when illuminated in dark surroundings making identification more easy and accurate.

In an aspect of the invention two or more of said two or more markers each defines a point-like marking.

Such an embodiment has the advantage that it will be possible for the image capturing device to identify the position of the marker with a very high degree of accuracy.

In an aspect of the invention said two or more markers protrude from a surface of said blade.

Markers which protrude from the surface of the blade can be identified even though the line of sight of the image capturing device is substantially parallel with the surface of the blade on which the marker is placed. Long and relatively slender blade of a modern wind turbine will present a multitude of such surfaces - in respect of an image capturing device placed in or at the root of the blade - and to enable that these surfaces also can be provided with markers it is advantageous to make the markers protrude from the surface.

Furthermore, a protruding marker can be attached to the surface of the blade e.g. in a non-destructive manner which enables that the marker can be retrofitted, it can be moved or replaced easily and inexpensively.

In an aspect of the invention said two or more markers are formed integrally with said blade.

Modern wind turbine blades comprise a very complex surface geometry and it can therefore be difficult to position the markers exactly after the blade has been made. However by integrating the markers in the blade during the making of the blade the markers may be positioned with a much higher accuracy which could enable much more accurate readings of the image capturing device.

Furthermore, if the markers was formed as depressions or indentations in the blade surface these markers would be less sensitive to dirt, icing and other and therefore make the markers more durable and reliable.

In an aspect of the invention at least two of said two or more markers are arranged on an inside surface of said blade.

The inside of the blade presents a much more controlled environment compared to the outside of the blade making output of the system more reliable.

Furthermore, markers placed inside the blade are less exposed to wear caused by the wind, rain, hails and other and the risk of the markers being covered by ice, dirt or other is also reduced.

According to the invention at least two of said two or more markers are arranged on an outside surface of said blade.

Even though a blade of a modern wind turbine is very large it can still be difficult or even impossible for personnel to access the inside of the blade. For markers provided to the blade after the making of the blade or to ensure repair or replacement of the markers it is therefore advantageous that the markers are arranged on the accessible outer surface of the blade.

Furthermore, modern wind turbine blades are so flexible that it would be impossible or at least very difficult for a camera placed in or at the root of the blade to register the position of markers positioned extreme inside the blade whereas a marker placed near or at the tip on the outside surface of the blade would become more visible to a camera placed near or at the root of the blade the more the blade bends.

According to the invention said at least one blade comprises two or more markers.

An image capturing device detecting the position of only one marker may provide the information that the blade is deforming and to some degree also how much. However it is not possible to deduct if a given change in position of a single marker originates from the blade bending, twisting or both. But by providing the blade with more than one marker it is possible - from a comparison of the change in position of a first marker with the change in position of a second marker - to deduct if the change in position originated from bending or twisting and how much the blade is bending and how much the blade is twisting.

E.g. if a marker placed near the leading edge of a blade had moved a certain distance in the direction of the pressure side of the blade, one might deduct that the blade was bending in direction of the pressure side. However if it substantially simultaneously was registered that a second marker placed near the trailing edge of the blade had moved a certain distance in the direction of the suction side of the blade it can be conclusively deducted that the blade is twisting. And likewise, if both markers were moving in the same direction it can conclusively be deducted that the blade is bending.

Furthermore by arranging the image capturing device so that it registers the position of more than one of the markers it is possible to obtain not only local information but also more detailed information on the shape of larger areas of the blade e.g. by means of only one camera making this system both simple and cost-efficient.

In an aspect of the invention, said two or more markers are mutually displaced in a longitudinal direction of said blade.

Displacing the markers in the longitudinal direction of the blade is advantageous in that it hereby is possible to obtain more precise information of the shape of the entire blade e.g. making it possible to deduct the position of the tip of the blade with relatively high accuracy.

In an aspect of the invention, said two or more markers are mutually displaced in a chord direction of said blade and/or in a direction perpendicular to said chord direction of said blade.

Displacing the markers in the chord direction and/or in a direction perpendicular to said chord direction of the blade is advantageous, first of all because it hereby is ensured that the markers better can be seen by the image capturing device and because by displacing the markers over a greater area of the blade cross section, it is possible to obtain and deduct much more accurate information on the shape of the blade particularly regarding twist of the blade.

In an aspect of the invention a first marker of said two or more markers comprise a first colour and a second marker of said two or more markers comprise a second colour and wherein said first colour is different from said second colour.

If the blade is provided with more than one marker it is advantageous to make at least some of the markers in different colours, hereby ensuring that a specific marker can be uniquely identified by the image capturing device on the basis of its colour. Hereby the system becomes more reliable.

In an aspect of the invention a first marker of said two or more markers are formed in a first shape and a second marker of said two or more markers are formed in a second shape and wherein said first shape is different from said second shape.

If the blade is provided with more than one marker it is advantageous to form at least some of the markers in different shapes, hereby ensuring that a specific marker can be uniquely identified by the image capturing device on the basis of its shape, or if the markers e.g. where in line; increasing size of the marker throughout the blade could ensure that at least a part of all the markers where visible by an image capturing device placed at or near the root of the blade. Hereby the system becomes more reliable.

In an aspect of the invention, said at least one image capturing device comprises optical focus means.

The quality of the information generated by the image capturing device is dependent on how precisely the image capturing device can register the position of the markers and it is therefore advantageous to provide the image capturing device with optical focus means.

In an aspect of the invention, said at least one image capturing device comprises a charge-coupled device (CCD).

Charge-coupled devices are relatively inexpensive and very accurate means for registering positions of markers.

In an aspect of the invention, said rotor further comprises light reflecting means arranged between said image capturing device and at least one of said markers.

Providing light reflecting means between the image capturing device and the markers is advantageous, in that it hereby is possible to guide light from the markers to the image capturing device even though there is no clear path directly between them.

In an aspect of the invention, said image capturing device is connected to said blade.

If the wind turbine comprises a pitch mechanism for adjusting the pitch angle of the blades, the accuracy of the system would be increased if the image capturing device was connected to the blade making it turn along with the markers when the pitch angle of the blade is adjusted.

In an aspect of the invention said wind turbine rotor further comprises an illumination device for illuminating at least one of said markers.

In dark surroundings it might be difficult for the image capturing device to establish the exact position of the markers and to increase the usability and reliability of the system it is advantageous to make the rotor comprise an illumination device.

In an aspect of the invention a main part of the light emitted from said illumination device is non-visible, such as near-infrared or ultraviolet light.

Particularly if the markers are located on an outside surface of the blade but also if they are located internally, the illumination of the blade by means of visible light might be annoying to the surrounding, aesthetically unwanted or in other ways disadvantageous and it is therefore advantageous to illuminate the markers by means of invisible light.

In an aspect of the invention, said wind turbine rotor further comprise a computing unit for establishing blade deformation values on the basis of an output from said image capturing device.

Making the rotor comprise a computing unit for establishing blade deformation values on the basis of the output from the image capturing device is advantageous in that the wind turbine without any further processing can use the information to control the operation of the wind turbine.

In an aspect of the invention, said image capturing device and at least one of said one or more marker are spaced apart by at least 10% of a total longitudinal length of said blade.

Even though a large modern wind turbine blade as a hole is relatively flexible, locally the blade can be relatively stiff and to make good use of the markers it is advantageous that they are spaced apart by at least 10% of the total longitudinal length of the blade to ensure useful and reliable information on the blades shape.

In an aspect of the invention, said image capturing device registers a position of said markers at a frequency enabling that edge-wise and/or flap-wise oscillations of said blade can be detected.

A given type of wind turbine blade has one or more substantially well defined eigenfrequencies toward flap-wise and edge-wise oscillations. If these frequencies is known it is possible to detect these kinds of oscillations by making the image capturing device registering the position of the markers more frequent than these eigenfrequencies. This is advantageous in that flap-wise and edge-wise oscillations can be difficult and/or expensive to detect otherwise and in that these types of oscillations in worst case can damage the blade.

It should be emphasised that by the term "*edge-wise oscillations*" is to be understood oscillations substantially along the chord between the trailing edge and the leading edge of the blade whereas by the term "*flap-wise oscillations*" is to be understood oscillations substantially between the pressure side and the suction side of the blade.

Furthermore, the invention provides for a wind turbine comprising a wind turbine rotor according to any the previous.

Hereby is achieved an advantageous embodiment of the invention.

In an aspect of the invention, said wind turbine comprises controlling means for controlling a pitch angle of said at least one wind turbine blade in relation to said deformation values.

Controlling the pitch angle of the blade in relation to the deformation values is advantageous in that changing the pitch angle is a fast and efficient way of changing the load situation of the blade.

In an aspect of the invention, said wind turbine comprises controlling means for controlling a rotational speed of said wind turbine rotor in relation to said deformation values.

Controlling the rotational speed of the rotor in relation to the deformation values is advantageous in that e.g. reduced speed could reduce the load on and thereby the deformation of the blades.

Even further, the invention provides for use of a wind turbine according to the previous, wherein said wind turbine is a pitch controlled wind turbine.

Pitch controlled wind turbines are characterized by particularly long and slender blades and these blades therefore tend to flex more than blades of e.g. a stall controlled wind turbine. It is therefore particularly advantageous to use a rotor according to the present invention in relation with a pitch controlled wind turbine.

### Figures

The invention will be described in the following with reference to the figures in which
fig. 1 illustrates a large modern wind turbine as known in the art,
fig. 2 illustrates a simplified cross section of a nacelle, as seen from the side,
fig. 3 illustrates a cross section of a wind turbine blade with internally placed markers, as seen from the front (not forming part of the invention),
fig. 4 illustrates a cross section of a wind turbine blade comprising a number of markers, as seen from the root of the blade (not forming part of the invention),
fig. 5 illustrates a cross section of a wind turbine blade comprising two image capturing device, as seen from the trailing edge of the blade (not forming part of the invention),
fig. 6 illustrates a cross section of a wind turbine blade comprising light reflecting means, as seen from the trailing edge of the blade (not forming part of the invention),
fig. 7 illustrates a wind turbine blade comprising an external camera, as seen from the suction side of the blade, and
fig. 8 illustrates a wind turbine comprising an external camera, as seen from the side.

### Detailed description of related art

Fig. 1 illustrates a large modern wind turbine 1 as known in the art, comprising a tower 2 and a wind turbine nacelle 3 positioned on top of the tower 2. The wind turbine rotor 4 comprises three wind turbine blades 5 mounted on a common hub 6 which is connected to the nacelle 3 through the low speed shaft extending out of the nacelle 3 front. In another embodiment the wind turbine rotor 4 could comprise another number of blades 5 such as one, two, four, five or more.

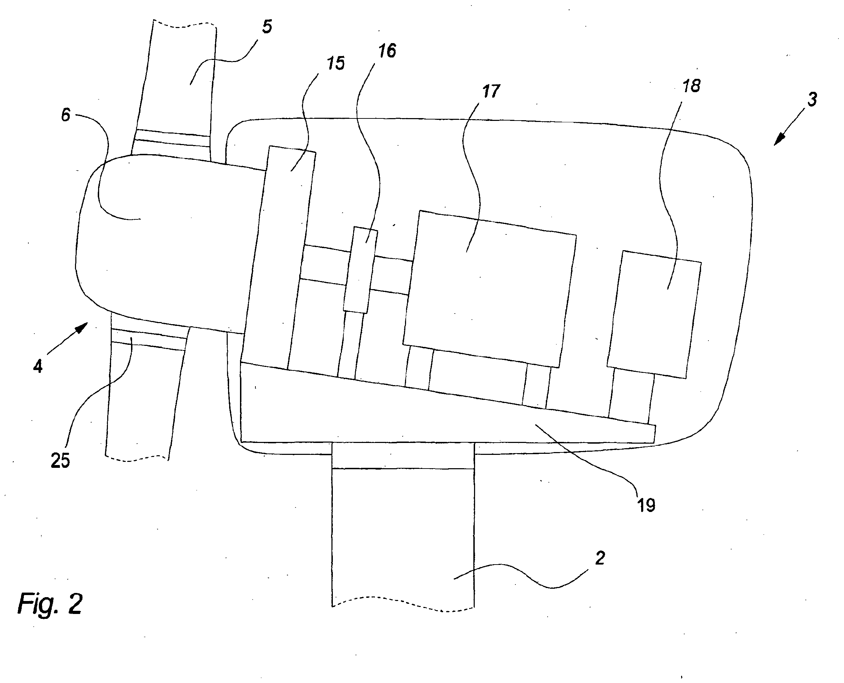

Fig. 2 illustrates a simplified cross section of a nacelle 3 of a prior art wind turbine 1, as seen from the side. Nacelles 3 exists in a multitude of variations and configurations but in most cases the drive train in the nacelle 3 almost always comprise one or more of the following components: a gearbox 15, a coupling (not shown), some sort of breaking system 16 and a generator 17. A nacelle 3 of a modern wind turbine 1 can also include a converter 18 (also called an inverter) and additional peripheral equipment such as further power handling equipment, control cabinets, hydraulic systems, cooling systems and more.

### Detailed description of related art

The weight of the entire nacelle 3 including the nacelle components 15, 16, 17, 18 is carried by a nacelle structure 19. The components 15, 16, 17, 18 are usually placed on and/or connected to this common load carrying nacelle structure 19. In this simplified embodiment the load carrying nacelle structure 19 only extends along the bottom of the nacelle 3 e.g. in form of a bed frame to which some or all the components 15, 16, 17, 18 are connected. In another embodiment the load carrying structure 19 could comprise a gear bell which through the main bearing 14 could transfer the load of the rotor 4 to the tower 2, or the load carrying structure 19 could comprise several interconnected parts such as latticework.

In this embodiment the blades 5 of the wind turbine rotor 4 are connected to the hub 6 through pitch bearings 25, enabling that the blades 5 can rotate around their longitudinal axis.

The pitch angle of the blades 5 could then e.g. be controlled by linear actuators, stepper motors or other means for rotating the blades 5 (not shown) connected to the hub 6 and the respective blade 5.

### Detailed description

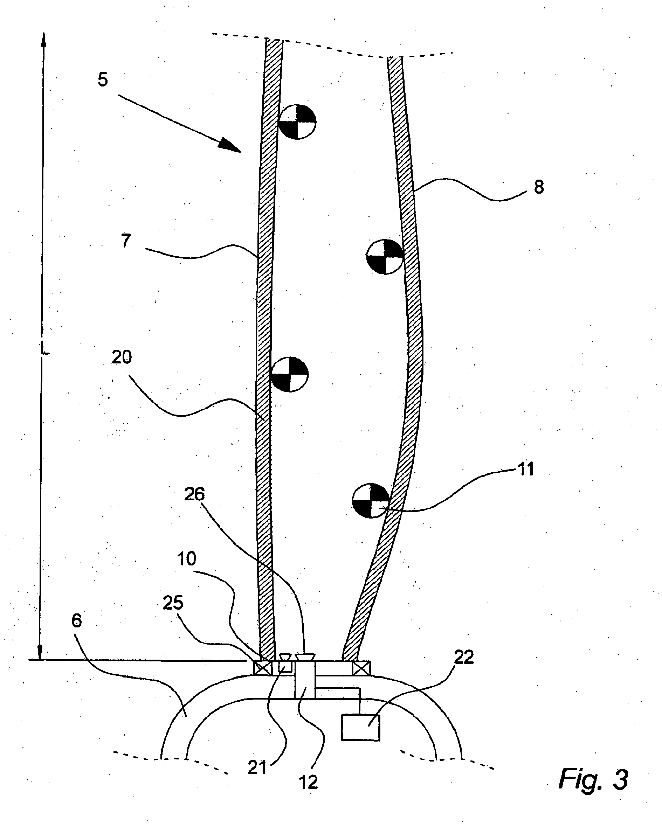

Fig. 3 (not part of the invention) illustrates a cross section of a wind turbine blade 5 with internally placed markers 11, as seen from the front/ pressure side 14 of the blade 5.

The wind turbine blade 5 comprises a leading edge 7, a trailing edge 8, a tip 9 and a root 10. A wind turbine blade 5 known in the art is typically made of a glass fibre and resin composite reinforced by carbon fibre, carbon fibre reinforced wood or a combination hereof.

In this embodiment the interior of the blade 5 is provided with four markers 11 rigidly connected to the blade structure 20 along the inside surface of the blade 5. In another embodiment the blade 5 could be provided with another number of markers 11 such as two, three, five, six or more and the markers 11 could be connected to the blade 5 in different positions.

In that the inside of the blade 5 can be difficult to access the number of markers 11 could e.g. be doubled during the making of the blade 5. If for any reason it should become difficult or impossible to detect the position of a specific marker 11 during the life of the blade 5, the extra marker 11 or markers 11 could be detected instead hereby providing the system with redundancy.

In this embodiment the four markers 11 are mutually displaced in the longitudinal direction L of the blade 5 making it possible to detect the deflection and deformation of the blade 5 in different places and thereby provide relatively precise information on the shape of the entire blade 5.

In this embodiment the markers 11 are formed as stickers connected to the surface of the blade 5 by means of an adhesive but in another embodiment the markers 11 could be connected to the blade 5 by means of welding, rivets, screws, bolts or other fastening means.

The markers 11 are hereby formed as entities separate from the blade 5 and in another embodiment the markers could also simply be painted directly onto the blade surface e.g. as painted dots.

In this embodiment the markers are coloured in distinct colours such as bright yellow, red, blue or other making the markers 11 stand out in relation to the usually gray surface of the blade 5. However if the markers 11 was located on the outside surface of the blade 5 it might be advantageous for aesthetical reasons to make the makers 11 in more discrete colours.

In one embodiment of the invention one or more of said one or markers having an appearance which by said at least one image capturing device is distinguishable from the surrounding blade onto which said one or more of said one or markers are arranged.

This will make the markers stand out more clearly, hereby making it more easy to identify the position of the marker and thereby increase the accuracy of the system.

If the blade surface, on which the markers 11 are located, had to be illuminated for the image capturing device 12 to detect the position of the markers 11 it could also be advantageous to make the markers comprise a visible light reflective area making the markers 11 clearly stand out if illuminated.

In this embodiment the substantially flat stickers are almost aligned with the surface of the blade 5 but in another embodiment the markers 11 could protrude from the surface of the blade 5 e.g. providing the markers 11 with different heights.

In an embodiment of the invention one or more of said one or more markers each defines a point-like marking.

In the present description and in the appended claims, the term "a point-like marking" should be interpreted as a marking defining a point. Such a point should not be interpreted as a point in a mathematical sense having no physical extension. Rather, the point should be interpreted as a physical point having a physical extension which is as small as possible. In the general case, the smaller the physical extent of the point the more accurately the at least one image capturing device may detect the position of the point. Accordingly, it is preferred that the point has a physical extension in any direction of 0.1 mm - 2.0 cm, such as 0.2 mm - 1.9 cm, for example 0.3 mm - z1:8 cm, such as 0.4 mm - 1.7 cm, for example 0.5 mm - 1.6 cm, such as 0.6 mm - 1.5 cm, such as 0.7 mm - 1.4 cm, for example 0.8 mm - 1.3 cm, such as 0.9 mm - 1.2 cm, for example 1.0 cm - 1.1 cm. However, in certain cases an upper limit of the physical extension, in any direction, of the point may be 3 cm - 10 cm, such as 4 cm - 9 cm, for example 5 cm - 8 cm, such as 6 cm - 7 cm.

Such an embodiment has the advantage that it will be possible for the image capturing device to identify the position of the marker with a very high degree of accuracy. The point-like marking may be provided by a range of different designs. One preferred design of a point-like marking is formed by two triangular-shaped elements opposing each other in such a way that the two elements point at the same specific point. Preferably such an embodiment is designed by providing two sets of two triangular-shaped elements opposing each other in pairs in such a way that the four elements of the two sets of triangular-shaped elements point at the same specific point. The triangular-shaped elements may be triangles or may be sectors of a circle. In such embodiments, the point is defined by tips of the triangular-shaped elements. Such a design of the point-like marking is shown as item 11 in fig. 3, 4, 5, 6 and 7. Other designs may comprise a crosshair or a suitable pattern defining a specific point which can be recognized by the image capturing device. Other designs may also be contemplated.

In another embodiment of the invention the markers 11 could be formed integrally with the blade 5 e.g. as coloured markers 11 incorporated in the blade surface during the making of the blade 5 or as protrusions or depression in the blade surface.

An image capturing device 12 needs to be powered and the information registered and/or recorded needs to be transmitted to a computing unit 22 or the control system controlling the operation of the wind turbine 1. However as a rule electrical conductors are unwanted in the blades 5 because they might attract lightning and in this embodiment of the invention the image capturing device 12 is connected to the hub 6 of the rotor 4

Furthermore an image capturing device 12 located in or at the hub 6 is much easier accessible than a image capturing device 12 located in or on the blade 5 and even further the hub 6 is more stiff and inflexible than the blade 5 making the information registered by a image capturing device 12 connected to hub 6 more accurate and reliable.

However in this embodiment of the invention the blade 5 comprised a pitch mechanism for adjusting the pitch angle of the blade 5 and it is therefore advantageous that the image capturing device 12 are connected rigidly to the blade 5, preferably to the root 10 of the blade 5, to make the image capturing device 12 turn with the blade 5 and the markers 11 when the pitch angle of the blade 5 is adjusted.

Placing the image capturing device 12 in the root 10 of the blade 5 is advantageous in that it hereby is possible to monitor substantially the entire blade 5 with only one image capturing device 12 and in that due to lightning it is disadvantageous to place lighting conducting devices out in the blade 5.

In this embodiment of the invention the image capturing device 12 is a digital camera with a charge-coupled device (generally known as a CCD) comprising arrays of photoelectric light sensors but in another embodiment the image capturing device 12 could be another type of two-dimensional lights sensor, it could be a one-dimensional light sensor, an active-pixel sensor (APS), a Bayer sensor or another type of optical sensors suitable for registering markers 11 in or on a wind turbine blade 5.

In this embodiment the image capturing device 12 is provided with optical focus means 26 in the form of a lens focusing the light before it hits the CCD and the image capturing device 12 comprises an optical filter ensuring that e.g. natural light entering the blade or other does not reduce the cameras 12 ability to detect the position of the markers 11.

In this embodiment the blade 5 is further provided with a light emitting device 21 for illuminating the inside of the blade 5 or at least the areas of the blade 5 provided with markers 11 hereby enabling that the passive markers 11 can be spotted by the camera 12.

In this case the light emitting device 21 is a floodlight but in another embodiment the light emitting device 21 could be some sort of a lamp comprising a incandescent light bulb, a laser, a Light Emitting Diode (LED) or any other light generating source capable of generating light of a strength and a wavelength that can be used for illuminating the markers 11 so that their position may be detected by the image capturing device 12.

In this embodiment the light emitted by the light emitting device 21 is visible light but in another embodiment the light could be invisible such as infrared light or ultraviolet light.

In this embodiment of the invention the hub 6 is provided with a computing unit 22 capable of establishing blade deformation values on the basis of the output from said image capturing device 12. In another embodiment the computing unit 22 could be integrated in the camera or the computing unit 22 could be placed elsewhere in the hub 6, in the blade 5, in the nacelle 3 or elsewhere in or at the wind turbine 1 or the computing unit 22 could be integrated in the general wind turbine control system.

The computing unit 22 could communicate wirelessly with the general wind turbine control system.

The computing unit 22 could comprise means for analysing images e.g. by comparing the registered position of the markers 11 with reference positions, by defining the registered positions of the markers 11 by means of coordinates and comparing there coordinates with values in a look-up table or other and thereby establish blade deformation values on the basis of which the operation of the wind turbine 1 could be carried out e.g. by adjusting the pitch angle of the individual blade 5 or all of the blades simultaneously, by adjusting the rotational speed of the rotor 4, by adjusting turbine control parameters and settings to optimize rotor energy capture and at the same time minimize turbine components' loads e.g. by means of some sort of active load alleviation mechanisms which could be implemented on or in the blades 5, the generators 17, the converters 18, the tower 2 or other and/or by simply sending an alarm if the deformation value is outside a preset range or if there is an imminent risk of the blades 5 being strained too much, the blades striking the tower 2 or other.

In this embodiment of the invention the light emitting device 21 is active substantially all the time i.e. when the wind turbine 1 is operating but also when the wind turbine is idling but in another embodiment the light emitting device 21 could only be active in very short periods when the image capturing device 12 is registering the position of the markers 11 hereby saving energy and increasing the life of the light emitting device 2.

In this embodiment of the invention the image capturing device 12 registers the position of the markers 11 once every minute, however the sampling frequency, could be both greater and smaller or it could be dependent on previous results, on input from other sensors or other. E.g. if a first and a second sample indicated bending in opposite directions it could imply that the blade 5 was oscillating and the sampling frequency could be increased to confirm this.

In another embodiment of the invention samples could be recorded in series e.g. by making the image capturing device 12 registers the position of the markers 11 at a frequency such as between five and fifty Hz over a period of e.g. two seconds every fifth minute whereby it is possible to conclusively deduct if and how much the blade 5 bends, twists and oscillates.

In another embodiment of the invention samples could also be recorded in preset intervals and then if specific conditions were present the sampling rate could be changed accordingly. This could e.g. be the case if specific ambient temperatures, wind speeds, pitch angles of the blades or other was present or the sampling rate could be changed if other sensors on or at the rotor 4 or the wind turbine 1 registered conditions that could give cause for alarm, such as accelerometers in the nacelle 3 or the tower 2 detecting vibrations which could originate from oscillations of the blades 5, proximity sensors or other detecting that the blades 5 are dangerously close to the tower 2 or other.

It should also be noted that at least for some blade 5 types the blade bending and twisting are usually to some degree coupled i.e. when bending, the blade 5 will always twist to some degree, which is further amplified by the aerodynamic loading.

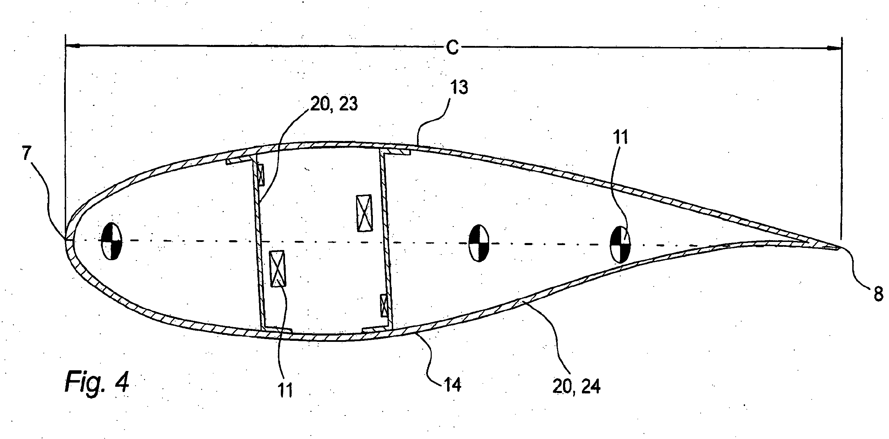

Fig. 4 (not part of the invention) illustrates a cross section of a wind turbine blade 5 comprising a number of markers 11, as seen from the root 10 of the blade 5.

In this embodiment some of the markers 11 are only displaced in the direction of the chord C and some markers 11 are displaced both in the chord direction C and in the direction perpendicular to the chord direction C.

In this embodiment the blade structure 20 comprises the blade shell 24 and internal strengthening members 23, which in this case is a transverse web but it could also be a spar or other kinds of stiffening means connected to or integrated in the blade 5. In this embodiment some of the markers 11 are connected to the blade shells 24 and some are connected to the strengthening members 23 in the blade 5, but in another embodiment all the markers 11 could be connected to the blade shell 24, to the strengthening members 23, to other parts of the blade structure 20 or any combination thereof.

In this embodiment the shape of the markers 11 differ according to their position in the blade 5. The size of the markers 11 increases with the distance from the root 10 of the blade 5 e.g. to ensure proper detection of all the markers 11. Furthermore the markers 11 placed in the strengthening member 23 extend further from the surface non which they are placed than the markers 11 placed on the blade shell 24, in that the strengthening member 23 is formed more straight in the longitudinal direction of the blade 5 compared to the more tapering blade shells 24.

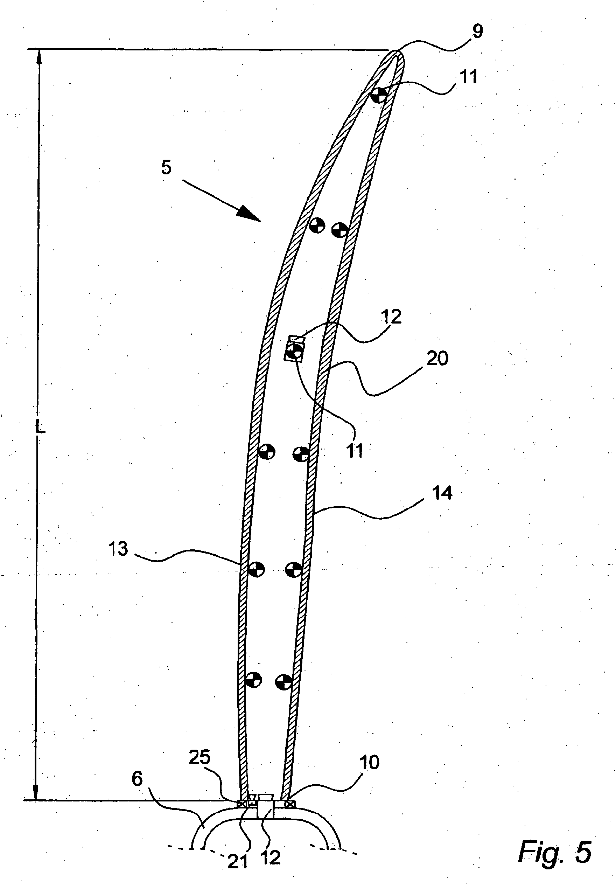

Fig. 5 (not part of the invention) illustrates a cross section of a wind turbine blade 5 comprising two image capturing devices 12, as seen from the trailing edge 8 of the blade 5.

Large modern wind turbine blades 5 can in certain cases flex so much that a image capturing device 12 placed in the hub 6 of the rotor 4 will not be able to see a markers 11 placed in the tip end of the blade 5.

In this embodiment the system therefore comprises two image capturing devices 12 in the form of a camera placed approximately halfway out the blade 5 and a camera placed in the hub 6. The image capturing device 12 placed in the blade 5 is further provided with a marker 11 so that the image capturing device 12 placed in hub 6 can register the position of the image capturing device 12 place in the blade. The position of the markers 11 placed in the tip end of the blade 5 in relation to the hub 6 can then be deducted from information from both the image capturing devices 12.

In another embodiment of the invention the blade 5 and/or the hub 6 could be provided with another number of image capturing devices 12 such as three, four, five or more.

In this embodiment the markers 11 are mutually displaced in both the chord direction C and in the longitudinal direction L of the blade 5. Actually the markers 11 are placed as pairs through out the longitudinal length L of the blade 5 and each pair of markers 11 are placed as peripheral as possible i.e. as close to the leading edge 7 and the trailing edge 8 respectively, as possible. This peripheral positioning of the pairs of markers 11 ensures that the twist of the blade 5 can be detected relatively accurately.

In another embodiment the markers 11 could be displaced differently e.g. in the direction perpendicular to the chord direction C, some markers 11 could be displaced in the chord direction C and some markers 11 could be displaced in the direction perpendicular to chord direction C and the blade could comprise markers 11 placed both single and in pairs.

In this embodiment of the invention the blade 5 is 44 meters long and a image capturing device 12 and at least one of the markers 11 is spaced apart by at least 5 meters i.e. the image capturing device 12 and the marker 11 is spaced apart by 10% of the total longitudinal length L of the blade 5.

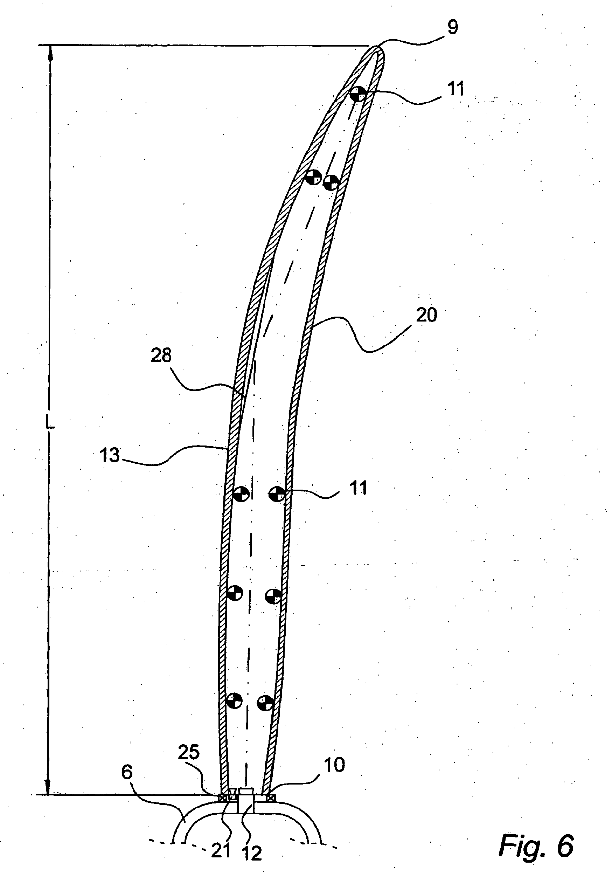

Fig. 6 (not part of the invention) illustrates a cross section of a wind turbine blade 5 comprising light reflecting means 28, as seen from the trailing edge 8 of the blade 5.

If the blade 5 is provided with markers 11 which can not at all times be seen by a image capturing device 12 placed in or at the hub 6, the blade 5 could further be provided with light reflecting means 28 between the image capturing device 12 and the markers 11. The light reflecting means 28 enables that the extreme positioned markers 11 through their reflection in the light reflecting means 28 can be reflected down to the image capturing device 12 placed in or at the hub 6 and based on information about the position of other markers 11 placed near the light reflecting means 28 the angle of the light reflecting means 28 can be deducted and thereby the position of the extreme positioned markers 11 can be deducted.

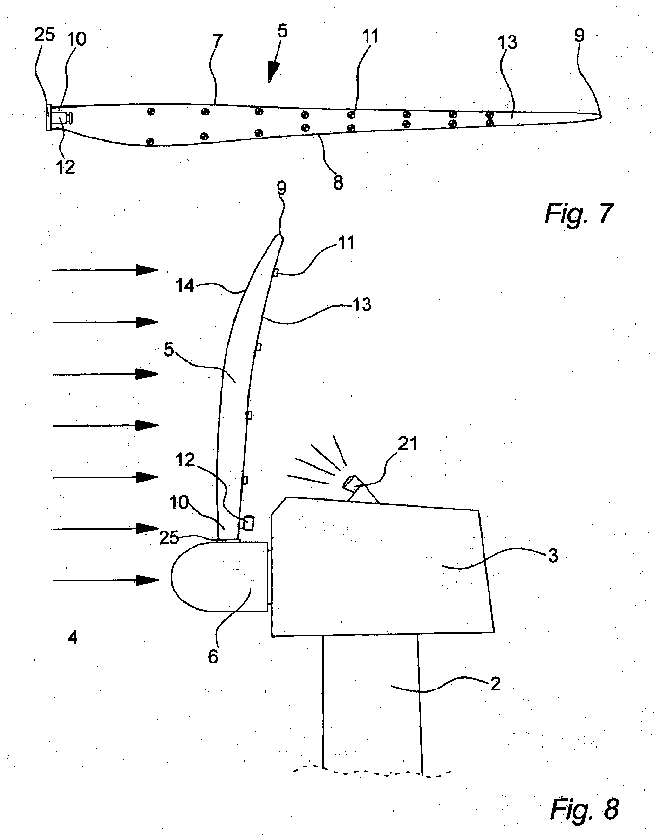

Fig. 7 illustrates a wind turbine blade 5 according to the invention comprising an external camera 12, as seen from the suction side 13 of the blade 5.

In this embodiment of the invention the image capturing device 12 is placed on the outside surface of the root part 10 of the blade 5. The image capturing device 12 and the markers 11 are all placed on the same side of the blade 5 which in this embodiment is the suction side 13 of the blade 5.

In this embodiment of the invention the markers 11 are only placed on the blade 5 for the purpose of being detected by the image capturing device 12 to establish the shape of the blade 5 but in another embodiment the markers 11 could be functional devices e.g. for altering the aero dynamical properties of the blade such as vortex generators, stall strips or a winglet or they could be any other device integrated in or attached to the blade 5 for a different purpose than being detected by the image capturing device 12.

The main advantage of mounting the image capturing device 12 and the markers 11 on the outside of the blade 5, is that especially the markers 11 are more accessible and easy to service in case of damage or malfunction. Furthermore a system arranged external on the blade 5 can be retrofitted on exciting wind turbines 1 and especially the tip position of the blade 5 can easily be monitored compared to a system arranged internally in the blade 5.

Fig. 8 illustrates a wind turbine 1 according to the invention comprising an external camera 12, as seen from the side.

Also in this embodiment of the invention the image capturing device 12 and the markers 11 are all placed on the suction side 13 of the blade 5. When the incoming wind (illustrated by the arrows in front of the rotor 4) hit the blade 5, the blade might bend backwards and a camera 12 placed on the suction side 13 of the blade 5 will therefore see that the distance between the markers 11 is increased. Likewise, twisting of the blade 5 can be detected from the relative change in position of the markers 11.

Placing the image capturing device 12 on the blade 5 near the root 10 is advantageous in that e.g. if the blade 5 comprise a pitch mechanism - such as a pitch controlled wind turbine 1 or a active stall controlled wind turbine 1 - enabling that the blade 5 can be turned around its longitudinal axis to optimize the blades angle of attack to the incoming wind or other, the image capturing device 12 will substantially maintain its position in relation to the markers 11 thereby increasing the accuracy of the system.

However, in another embodiment of the invention the image capturing device 12 could be place on the outside of the hub 6 e.g. where the wind turbine 1 was a stall controlled wind turbine 1 which do not comprise means for pitching the blades 5.

In a further embodiment not part of the invention the image capturing device 12 could also be placed elsewhere on or near the wind turbine 1 such as on the nacelle 3, on the tower 2, on the ground or on a stand or a pole in front, besides or behind the wind turbine or on a neighbouring wind turbine 1. The image capturing device 12 could then register the position of the markers 11 when the blade 5 is in a specific angular position and compare the information with previous recordings or with reference positions, e.g. taking into account any change in the pitch angle of the blade, any change in the yaw angle or other.

A system where the image capturing device 12 is not mounted on the rotor 4 and therefore do not rotate along with the markers 11 would properly not be able to detect the bending and the twisting of the blade 5 as precisely as systems where the image capturing device 12 is mounted in or on the blade 5 or in or on the hub 6 but if reduced accuracy was acceptable the image capturing device 12 could be much easier accessible and it could be easier to retrofit the system on existing wind turbines 1.

In this embodiment the wind turbine 1 is further provided with a light emitting device 21 in the form of a spotlight placed on top of the nacelle 3. The light emitting device 21 would then light up the blade 5 when the tip 9 of the blade 5 is pointing upwards. The wind turbine 1 could then further be provided with other light emitting device 21 e.g. positioned on the underside of the nacelle, on the tower or on the ground surrounding the wind turbine to illuminate the blade 5 in different angular positions.

The invention has been exemplified above with reference to specific examples of wind turbine blades 5, markers 11, image capturing devices 12 and other. However, it should be understood that the invention is not limited to the particular examples described above but may be designed and altered in a multitude of varieties within the scope of the invention as specified in the claims.

### List

1. Wind turbine
2. Tower
3. Nacelle
4. Rotor
5. Blade
6. Hub
7. Leading edge
8. Trailing edge
9. Tip
10. Root
11. Marker
12. Image capturing device
13. Suction side
14. Pressure side
15. Gearbox
16. Braking system
17. Generator
18. Converter
19. Nacelle structure
20. Blade structure
21. Light emitting device
22. Computing unit
23. Strengthening member
24. Blade shell
25. Pitch bearing
26. Optical focus means
27. Optical filter
28. Light reflecting means L. Longitudinal length of blade
C. Chord

## Claims

1. A wind turbine rotor (4), comprising
a hub (6),
at least one wind turbine blade (5), wherein said at least one wind turbine blade (5) being mounted on said hub (6), and
at least one image capturing device (12),
**characterised in that** two or more markers (11) are arranged on said blade (5) so that said at least one image capturing device (12) may detect the position of said markers (11),
said at least one image capturing device (12) is connected to the hub (6) or is connected rigidly to said blade (5), and
wherein at least one of said two or more markers (11) are arranged on an outside surface of said blade (5).

2. A wind turbine rotor according to claim 1, wherein one or more of said one or more markers each defines a point-like marking.

3. A wind turbine rotor according to any of the preceding claims, wherein at least one of said two or more markers are arranged on an inside surface of said blade.

4. A wind turbine rotor according to any of the preceding claims, wherein said two or more markers are mutually displaced in a longitudinal direction of said blade and/or wherein said two or more markers are mutually displaced in a chord direction of said blade and/or in a direction perpendicular to said chord direction of said blade.

5. A wind turbine rotor according to any of the preceding claims, wherein a first marker of said two or more markers comprise a first colour and a second marker of said two or more markers comprise a second colour and wherein said first colour is different from said second colour.

6. A wind turbine rotor according to any of the preceding claims, wherein a first marker of said two or more markers are formed in a first shape and a second marker of said two or more markers are formed in a second shape and wherein said first shape is different from said second shape.

7. A wind turbine rotor according to any of the preceding claims, wherein said at least one image capturing device comprises a charge-coupled device (CCD).

8. A wind turbine rotor according to any of the preceding claims, wherein said rotor further comprises light reflecting means arranged between said image capturing device and at least one of said markers.

9. A wind turbine rotor according to any of the preceding claims, wherein said wind turbine rotor further comprises an illumination device for illuminating at least one of said markers, and optionally wherein a main part of the light emitted from said illumination device is non-visible, such as near-infrared or ultraviolet light.

10. A wind turbine rotor according to any of the preceding claims, wherein said wind turbine rotor further comprise a computing unit for establishing blade deformation values on the basis of an output from said image capturing device.

11. A wind turbine rotor according to any of the preceding claims, wherein said image capturing device and at least one of said two or more markers are spaced apart by at least 10% of a total longitudinal length of said blade.

12. A wind turbine rotor according to any of the preceding claims, wherein said image capturing device registers a position of said markers at a frequency enabling that edge-wise and/or flap-wise oscillations of said blade can be detected.

13. A wind turbine comprising a wind turbine rotor according to any of the preceding claims.

14. A wind turbine according to claim 13, wherein said wind turbine comprises controlling means for controlling a pitch angle of said at least one wind turbine blade in relation to said deformation values and/or wherein said wind turbine comprises controlling means for controlling a rotational speed of said wind turbine rotor in relation to said deformation values.

15. Use of a wind turbine according to any of claims 13 or 14 wherein said wind turbine is a pitch controlled wind turbine.

## Patentansprüche

1. Windturbinenrotor (4), der umfasst:
eine Nabe (6),
mindestens einen Windturbinenflügel (5), wobei der mindestens eine Windturbinenflügel (5) auf der Nabe (6) befestigt ist, und
mindestens eine Bilderfassungsvorrichtung (12),
**dadurch gekennzeichnet, dass** zwei oder mehrere Markierer (11) auf dem Flügel (5) derart angeordnet sind, dass die mindestens eine Bilderfassungsvorrichtung (12) die Position der Markierer (11) detektieren kann,
dass mindestens eine Bilderfassungsvorrichtung (12) mit der Nabe (6) verbunden ist oder starr mit dem Flügel (5) verbunden ist, und
wobei mindestens einer der zwei oder der mehreren Markierer (11) auf einer äußeren Oberfläche des Flügels (5) angeordnet ist.

2. Windturbinenrotor nach Anspruch 1, wobei einer oder mehrere des einen oder der mehreren Markierer jeweils eine punktähnliche Markierung definieren.

3. Windturbinenrotor nach einem der vorhergehenden Ansprüche, wobei mindestens einer der zwei oder mehreren Markierer auf einer inneren Oberfläche des Flügels angeordnet ist.

4. Windturbinenrotor nach einem der vorhergehenden Ansprüche, wobei die zwei oder mehreren Markierer in einer Längsrichtung gegenseitig versetzt angeordnet sind und/oder wobei die zwei oder mehreren Markierer in einer Sehnenrichtung des Flügels und/oder in einer Richtung, die senkrecht zu der Sehnenrichtung des Flügels ist, gegenseitig versetzt angeordnet sind.

5. Windturbinenrotor nach einem der vorhergehenden Ansprüche, wobei ein erster Markierer der zwei oder mehreren Markierer eine erste Farbe umfasst und ein zweiter Markierer der zwei oder mehreren Markierer eine zweite Farbe umfasst und wobei die erste Farbe eine andere als die zweite Farbe ist.

6. Windturbinenrotor nach einem der vorhergehenden Ansprüche, wobei ein erster Markierer der zwei oder mehreren Markierer in einer ersten Form gebildet ist und ein zweiter Markierer der zwei oder mehreren Markierer in einer zweiten Form gebildet ist und wobei die erste Form eine andere als die zweite Form ist.

7. Windturbinenrotor nach einem der vorhergehenden Ansprüche, wobei die mindestens eine Bilderfassungsvorrichtung eine ladungsträgergekoppelte Schaltungsvorrichtung (CCD) ist.

8. Windturbinenrotor nach einem der vorhergehenden Ansprüche, wobei der Rotor ferner lichtreflektierende Mittel umfasst, die zwischen der Bilderfassungsvorrichtung und mindestens einem der Markierer angeordnet sind.

9. Windturbinenrotor nach einem der vorhergehenden Ansprüche, wobei der Windturbinenrotor ferner eine Beleuchtungsvorrichtung zum Beleuchten von mindestens einem der Markierer umfasst, und wobei optional ein Hauptteil des Lichts, das von der Beleuchtungsvorrichtung emittiert wird, nicht sichtbar ist, wie etwa Nahinfrarot- oder Ultraviolett-Licht.

10. Windturbinenrotor nach einem der vorhergehenden Ansprüche, wobei der Windturbinenrotor ferner eine Recheneinheit zum Erstellen von Flügelverformungswerten auf der Grundlage einer Ausgabe aus der Bilderfassungsvorrichtung umfasst.

11. Windturbinenrotor nach einem der vorhergehenden Ansprüche, wobei die Bilderfassungsvorrichtung und mindestens einer der zwei oder mehreren Markierer um mindestens 10 % einer Gesamtlängsrichtung des Flügels beabstandet angeordnet sind.

12. Windturbinenrotor nach einem der vorhergehenden Ansprüche, wobei die Bilderfassungsvorrichtung eine Position der Markierer bei einer Frequenz erfasst, die es ermöglicht, dass die Schwingungen an den Flügelkanten und/oder an den Flügelklappen des Flügels detektiert werden können.

13. Windturbine, die einen Windturbinenrotor nach einem der vorhergehenden Ansprüche umfasst.

14. Windturbine nach Anspruch 13, wobei die Windturbine Steuermittel zum Steuern eines Anstellwinkels des mindestens einen Windturbinenflügels in Bezug zu den Verformungswerten umfasst, und/oder wobei die Windturbine Steuermittel zum Steuern einer Drehgeschwindigkeit des Windturbinenrotors in Bezug zu den Verformungswerten umfasst.

15. Verwendung einer Windturbine nach einem der Ansprüche 13 oder 14, wobei die Windturbine eine durch einen Anstellwinkel gesteuerte Windturbine ist.

## Revendications

1. Rotor d'éolienne (4), comprenant
un moyeu (6),
au moins une pale d'éolienne (5), dans lequel ladite au moins une pale d'éolienne (5) étant montée sur ledit moyeu (6), et
au moins un dispositif de capture d'image (12),
**caractérisé en ce que** deux ou plusieurs marqueurs (11) sont agencés sur ladite pale (5) de sorte que ledit au moins un dispositif de capture d'image (12) peut détecter la position desdits marqueurs (11),
ledit au moins un dispositif de capture d'image (12) est relié au moyeu (6) ou est relié de manière rigide à ladite pale (5), et
dans lequel l'un au moins desdits deux ou plusieurs marqueurs (11) est disposé sur une surface extérieure de ladite pale (5).

2. Rotor d'éolienne selon la revendication 1, dans lequel un ou plusieurs desdits un ou plusieurs marqueurs définissent chacun un repère semblable à un point.

3. Rotor d'éolienne selon l'une quelconque des revendications précédentes, dans lequel au moins un desdits deux ou plusieurs marqueurs sont agencés sur une surface intérieure de ladite pale.

4. Rotor d'éolienne selon l'une quelconque des revendications précédentes, dans lequel lesdits deux ou plusieurs marqueurs sont mutuellement déplacés dans une direction longitudinale de ladite pale et/ou dans lequel lesdits deux ou plusieurs marqueurs sont mutuellement déplacés dans une direction de corde de ladite pale et/ou dans une direction perpendiculaire à ladite direction de corde de ladite pale.

5. Rotor d'éolienne selon l'une quelconque des revendications précédentes, dans lequel un premier marqueur desdits deux ou plusieurs marqueurs comprennent une première couleur et un second marqueur desdits deux ou plusieurs marqueurs comprend une seconde couleur et dans lequel ladite première couleur est différente de ladite seconde couleur.

6. Rotor d'éolienne selon l'une quelconque des revendications précédentes, dans lequel un premier marqueur desdits deux ou plusieurs marqueurs est formé dans une première forme et un second marqueur desdits deux ou plusieurs marqueurs est formé dans une seconde forme et dans lequel ladite première forme est différente de ladite seconde forme.

7. Rotor d'éolienne selon l'une quelconque des revendications précédentes, dans lequel ledit au moins un dispositif de capture d'image comprend un circuit à couplage de charges (CCD).

8. Rotor d'éolienne selon l'une quelconque des revendications précédentes, dans lequel ledit rotor comprend en outre un moyen de réflexion de lumière agencé entre ledit dispositif de capture d'image et au moins un desdits marqueurs.

9. Rotor d'éolienne selon n'importe laquelle des revendications précédentes, dans lequel ledit rotor d'éolienne comprend en outre un dispositif d'éclairage pour éclairer au moins un desdits marqueurs, et de manière facultative dans lequel une partie principale de la lumière émise à partir dudit dispositif d'éclairage est non visible, comme l'infrarouge proche ou la lumière ultraviolette.

10. Rotor d'éolienne selon l'une quelconque des revendications précédentes, dans lequel ledit rotor d'éolienne comprend en outre une unité de calcul pour établir des valeurs de déformation de pale sur la base d'une sortie provenant dudit dispositif de capture d'image.

11. Rotor d'éolienne selon l'une quelconque des revendications précédentes, dans lequel ledit dispositif de capture d'image et au moins un desdits deux ou plusieurs marqueurs sont espacés par au moins 10 % d'une longueur longitudinale totale de ladite pale.

12. Rotor d'éolienne selon l'une quelconque des revendications précédentes, dans lequel ledit dispositif de capture d'image enregistre une position desdits marqueurs à une fréquence permettant que des oscillations dans le sens de la traînée et/ou dans le sens du battement de ladite pale puissent être détectées.

13. Éolienne comprenant un rotor d'éolienne selon l'une quelconque des revendications précédentes.

14. Éolienne selon la revendication 13, dans laquelle ladite éolienne comprend un moyen de commande pour commander un angle de calage de ladite au moins une pale d'éolienne en relation auxdites valeurs de déformation et/ou dans laquelle ladite éolienne comprend un moyen de commande pour commander une vitesse de rotation dudit rotor d'éolienne en relation auxdites valeurs de déformation.

15. Utilisation d'une éolienne selon l'une quelconque des revendications 13 ou 14, dans laquelle ladite éolienne est une l'éolienne à calage commandé.
